# EUROPÄISCHE PATENTSCHRIFT

(11) **EP 1 674 343 B1**
(45) Veröffentlichungstag und Bekanntmachung des Hinweises auf die Patenterteilung: **27.02.2008**
(21) Anmeldenummer: 04030554.2
(22) Anmeldetag: 23.12.2004
(51) Int. Cl.: B60R 16/02

(54) **Elektrische Verbindungseinrichtung**
Electrical connecting device
Dispositif de connection électrique

(43) Veröffentlichungstag der Anmeldung: 28.06.2006
(73) Patentinhaber: Delphi Technologies, Inc., Troy, Michigan 48007 (US)
(72) Erfinder: Kürschner, Sven, 55597 Wöllstein (DE)
(74) Vertreter: Becker, Bernd

(56) Entgegenhaltungen:
- DE-A1- 19 807 212
- DE-A1- 19 858 874
- DE-U1- 8 508 742
- FR-A- 2 830 989

## Beschreibung

Die Erfindung bezieht sich auf eine elektrische Verbindungseinrichtung zur Anordnung zwischen einem Lenkrad und einem Lenkstockmodul eines Kraftfahrzeuges mit einem Rotorteil und einem Statorteil zum Umschließen mindestens eines jeweils endseitig damit verbundenen elektrischen Leiters, wobei das in das Statorteil eingesetzte Rotorteil mit einem in dem Statorteil gelagerten Führungsring drehfest verbunden ist und zur Fixierung des Rotorteils in einer Montageposition eine durch eine Montage des Lenkrades zu lösende Druckfeder beaufschlagte Sperrwippe vorhanden ist.

Verbindungseinrichtungen dieser Art werden insbesondere zur Herstellung elektrischer Verbindungen zwischen einer Stromquelle und einer in der Lenkradschüssel angeordneten Gas-Aufprall-Schutzeinrichtung oder Lenkradschaltern von Kraftfahrzeugen eingesetzt. Hierbei weist ein zwischen dem Statorteil und dem dazu verdrehbaren Rotorteil angeordneter Leiter eine solche Länge auf, dass er dem beidseitig etwa drei Umdrehungen betragenden Lenkausschlag zu folgen vermag, wobei sich der flexible Leiter während des Lenkradausschlages aus einer mittleren Lage in der einen Richtung bis zur Anlage an dem Statorteil nach außen aufweitet und in der anderen Richtung bis zur Anlage an dem Rotorteil nach innen zusammenzieht. Des Weiteren ist es bekannt, dem Leiter eine formschlüssige Zwangsführung zuzuordnen, die umfangsseitig am Leiter angreift und bei einer Drehbewegung des Rotorteils ein definiertes Ab- bzw. Aufwickeln des Leiters bewirkt.

Die WO 00/76811 A1 zeigt eine Vorrichtung zum Übertragen von Energie, die im Wesentlichen aus einem eine Statorbaueinheit und eine Rotorbaueinheit aufweisenden Gehäuse und zumindest einer innerhalb eines ringförmigen Hohlraumes des Gehäuses aufgenommenen flexiblen Leitung besteht. Zur Positionssicherung der Rotorbaueinheit in ihrer definierten Montageposition vor der Montage des Lenkrades ist eine mittels eines Stößels zu betätigende Sperrwippe vorhanden, die von einer Schraubendruckfeder beaufschlagt wird. Während der Montage des Lenkrades wird die Sperrwirkung der Sperrwippe automatisch aufgehoben, weil ein am Lenkrad vorhandenes Wirkelement über den Stößel auf die Sperrwippe einwirkt. Bei einer Demontage des Lenkrades wird aufgrund der Schraubendruckfeder automatisch die Sperrlage der Sperrwippe wieder hergestellt. Um bis zum Einbau der Vorrichtung die dazu unbedingt notwendige Mittenstellung zu gewährleisten, ist an einem Rotoroberteil ein Sicherungsglied festgelegt, das nur durch mechanische Zerstörung vom Rotoroberteil entfernt werden kann. Das Sicherungsglied ist derart angebracht, dass die zur Betätigung des Stößels notwendige Öffnung vollkommen abgedeckt ist, weshalb die in der Statorbaueinheit gelagerte Sperrwippe nicht betätigt werden kann.

Darüber hinaus offenbart die DE 198 07 212 A1 ein Lenkradsystem für ein Kraftfahrzeug mit einer Lenksäule mit darin befindlicher Lenkspindel. Das Lenkradsystem umfasst ein Lenkradmodul mit einem Lenkrad, einer daran befestigten Lenkradnabe, einer Rückseitenabdeckung und einer elektrischen Einrichtung, wobei die Rückseitenabdeckung einen elektrischen Leiter und eine im Wesentlichen koaxial zur Lenkradnabe liegende Trommel hat, die eine erste Ausrichtformation und einen ersten elektrischen Anschluss aufweist. Der elektrische Leiter ist um die Trommel gewickelt und mit seinem ersten Ende am ersten elektrischen Anschluss und mit seinem zweiten Ende an der elektrischen Einrichtung des Lenkradmoduls angeschlossen. Im Weiteren ist ein mit dem Lenksäulengehäuse verbundenes Kopplungsteil vorgesehen, das eine zweite Ausrichtformation passend zur ersten Ausrichtformation, sowie einen zweiten elektrischen Anschluss aufweist. Bei der Montage des Lenkradmoduls im Fahrzeug passt die erste Ausrichtformation der Trommel zur zweiten Ausrichtformation des Kopplungsteils derart, dass das Lenkradmodul nur in einer vorbestimmten Ausrichtung eingebaut werden kann, in der der erste und zweite elektrische Anschluss zueinander ausgerichtet sind und die Lenkradnabe zur Lenkspindel zu einer vorbestimmten Lage ausgerichtet ist. Die Rückseitenabdeckung umfasst eine Verriegelung für die Trommel, um diese in einer vorbestimmten Drehstellung zum Lenkrad zu halten, bevor das Lenkradmodul im Kraftfahrzeug eingebaut wird, wobei die Verriegelung lösbar ist, nachdem die Trommel passend zum Kopplungsteil ausgerichtet ist, wodurch das restliche Lenkradmodul gegenüber der Trommel gedreht werden kann, die drehfest gegenüber dem Kopplungsteil ist. Die Verriegelung umfasst eine Klinke, ein Spannelement, einen Drehzapfen, mit dem die Klinke drehbar an der Trommel befestigt ist und einen Riegel, der vom Spannelement in Eingriff mit einem Haltelement an einen Deckel gedrückt wird, wodurch die Trommel drehfest gegenüber dem Deckel ist. Bei Kontakt eines Teils der Klinke mit einer Entriegelungseinrichtung am Kopplungsteil wird die Klinke gegen die Spannvorrichtung um den Drehzapfen gedreht und der Riegel aus dem Halteelement gelöst.

Schließlich offenbart die den nächstliegenden Stand der Technik bildende FR-A-2 830 989 eine elektrische Verbindungseinrichtung zur Anordnung zwischen einem Lenkrad und einem Lenkstockmodul eines Kraftfahrzeuges mit einem Rotorteil und einem Statorteil zum Umschließen mindestens eines jeweils endseitig damit verbundenen elektrischen Leiters, wobei das in das Statorteil eingesetzte Rotorteil mit einem in dem Statorteil gelagerten Führungsring drehfest verbunden ist. Zur Fixierung des Rotorteils in einer Montageposition ist ein durch eine Montage des Lenkrades zu lösender Druckfeder beaufschlagter Sperrhebel vorhanden.

Es ist Aufgabe der Erfindung, eine elektrische Verbindungseinrichtung der eingangs genannten Art zu schaffen, die einen konstruktiv einfachen und kompakten Aufbau aufweist und bei der das Rotorteil in einer Montageposition gegenüber dem Statorteil fixiert ist.

Erfindungsgemäß wird die Aufgabe dadurch gelöst, dass die Sperrwippe derart zwischen dem Führungsring und dem Statorteil wirkt, dass bei einem nicht montierten Lenkrad eine Relativverdrehung verhindert ist, wobei ein Riegelarm der Sperrwippe von einem stirnseitig in das Rotorteil eingesetzten Druckfeder belasteten Betätiger in Richtung des Führungsringes beaufschlagt ist und das freie Ende des Riegelarmes in der Fixierstellung in einer Vertiefung des Führungsringes einliegt.

Aufgrund dieser Maßnahme befindet sich die Sperrwippe außerhalb des Bereichs, in dem der Leiter zwischen dem Statorteil und dem Rotorteil verläuft, und es ist kein zusätzlicher Einbauraum für die Sperrwippe erforderlich, weshalb die Verbindungseinrichtung kompakt aufgebaut ist. Da der Führungsring mit dem Rotorteil drehfest verbunden ist, ist durch die Wirkung der Sperrwippe zwischen dem Führungsring und dem Statorteil eine Fixierung des Rotorteils gegenüber dem Statorteil in einer Montageposition gewährleistet, die bei der Montage des Lenkrads selbsttätig aufgehoben wird. Aufgrund der Beaufschlagung des Riegelarmes durch den Betätiger ist die Sperrwippe in einer Lage gehalten, in der die Verdrehung des Rotorteils gegenüber dem Statorteil ausgeschlossen ist. Im Weiteren ist durch diese Anordnung sichergestellt, dass weder die Sperrwippe noch der Betätiger über den Außendurchmesser des Statorteils vorstehen, wodurch ein kompakter Aufbau der Verbindungseinrichtung gegeben ist. Um die Sperrwippe in der Fixierstellung zu stabilisieren und eine übermäßige Krafteinwirkung auf die Lagerstelle zu vermeiden, liegt das freie Ende des Riegelarms in der Fixierstellung in einer Vertiefung des Führungsringes ein.

Um eine leicht handhabbare Verbindungseinrichtung bereitzustellen, ist der Führungsring auf einer dem Rotorteil abgewandten Seite eines Bodens des Statorteils angeordnet. Sonach ist das Rotorteil aufgrund seiner drehfesten Verbindung mit dem Führungsring innerhalb des Statorteils unverlierbar gehalten.

In vorteilhafter Ausgestaltung weist das Rotorteil eine Lagerstelle für die Sperrwippe auf, deren Riegelarm unterhalb des Rotorteils angeordnet ist und deren Betätigungsarm sich in einen Freiraum zur Aufnahme einer Lenkradnabe erstreckt. Beim Aufstecken des Lenkrades taucht die Lenkradnabe in den sich konzentrisch zu einer Lenksäule erstreckenden Freiraum ein und beaufschlagt direkt den Betätigungsarm der Sperrwippe, weshalb es nicht erforderlich ist, zusätzliche Bauteile zu deren Beaufschlagung vorzusehen.

Zweckmäßigerweise ist die Sperrwippe im Querschnitt S-förmig ausgestaltet.

Um den Führungsring gegenüber dem Statorteil in der Fixierstellung des Riegelarmes zu blockieren, ragt vorzugsweise der Riegelarm in der Fixierstellung in eine bodenseitige Aussparung des Statorteils. Bei einer Verdrehung des Rotorteils oder des Führungsringes gegenüber dem Statorteil kommen seitliche Flächen des Riegelarmes an zugeordneten Wandungen der Aussparung verhältnismäßig großflächig zur Anlage, weshalb die Verriegelung einem relativ großen Drehmoment standhält.

In Weiterbildung beaufschlagt die freie Stirnseite der Lenkradnabe bei der Montage des Lenkrades den Betätigungsarm der Sperrwippe derart, dass die Sperrwippe entgegen der Wirkung des Betätigers verschwenkt und der Riegelarm aus der Aussparung des Statorteils gelangt. Sonach ist das Rotorteil mit dem Führungsring frei gegenüber dem Statorteil verdrehbar. Beim Abziehen des Lenkrades von einer die Verbindungseinrichtung durchragenden Lenksäule wird die Lenkradnabe von dem Betätigungsarm der Sperrwippe entfernt und die Sperrwippe verschenkt aufgrund des Druckfeder belasteten Betätigers, bis das freie Ende des Riegelarmes auf dem Boden des Statorteils zur Auflage kommt. Durch eine entsprechende Verdrehung des Rotorteils gelangt der Riegelarm in die Aussparung des Statorteils und das Rotorteil mit dem zugeordneten Führungsring ist wieder gegenüber dem Statorteil fixiert. Falls sich beim Abziehen des Lenkrades von der Lenksäule die zu lenkenden Räder des Kraftfahrzeuges in einer Stellung für eine Geradeausfahrt befinden, ist die Verbindungseinrichtung in ihrer Montageposition fixiert.

Um dem Führungsring eine weitere Funktion zuzuordnen, weist bevorzugt der Führungsring eine umfangsseitige Verzahnung zum Antrieb eines Messzahnrades eines Lenkwinkelsensors auf. Da sich der Führungsring und das Rotorteil gemeinsam mit dem Lenkrad drehen, ist ein synchroner Antrieb des Lenkwinkelsensors sichergestellt. Selbstverständlich kann dem Messzahnrad des Lenkwinkelsensors ein Getriebe zugeordnet sein.

Zur Bereitstellung einer verhältnismäßig einfachen sowie stabilen Verbindung ist zweckmäßigerweise das Rotorteil mit dem Führungsring drehfest verklipst.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

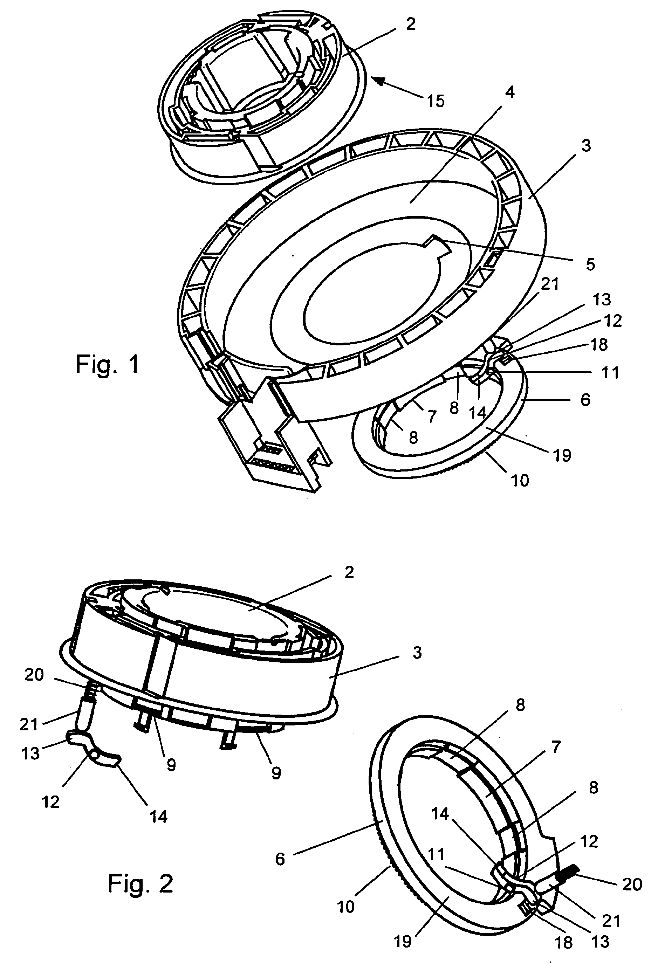

- Fig. 1: eine perspektivische Explosionsdarstellung der erfindungsgemäßen Verbindungseinrichtung,
- Fig. 2: eine weitere perspektivische Explosionsdarstellung der Verbindungseinrichtung nach Fig. 1,

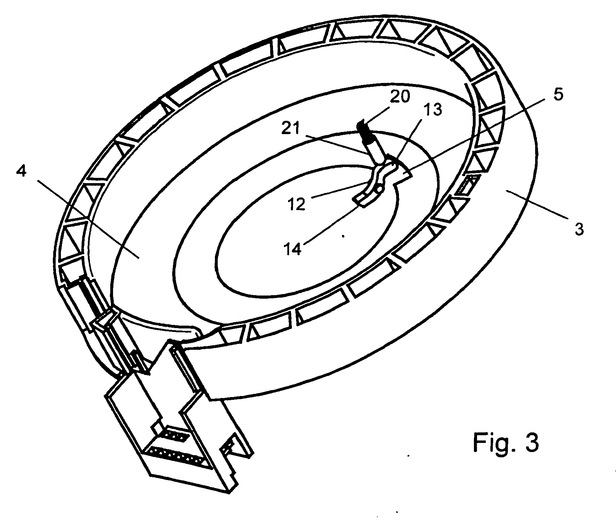

- Fig. 3: eine perspektivische Teildarstellung der Verbindungseinrichtung nach Fig. 1,

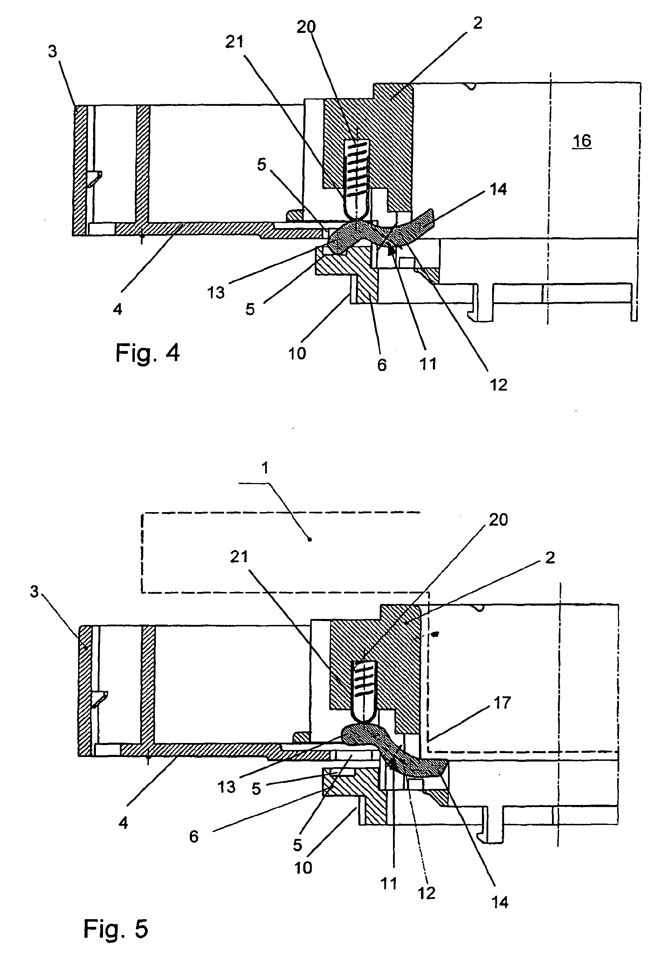

- Fig. 4: einen Teilschnitt durch die Verbindungseinrichtung nach Fig. 1 und
- Fig. 5: den Teilschnitt nach Fig. 4 mit einem montierten Lenkrad.

Die elektrische Verbindungseinrichtung zur Anordnung zwischen einem Lenkrad 1 und einem Lenkstockmodul eines Kraftfahrzeuges umfasst ein Rotorteil 2, das in ein Statorteil 3 zum Umschließen mit mindestens eines jeweils endseitig damit verbundenen elektrischen Leiters eingesetzt ist. Das Statorteil 3 weist einen Boden 4 mit einer Aussparung 5 auf, wobei das Rotorteil 2 stirnseitig derart auf dem Boden 4 des Statorteils 3 aufliegt, dass es die Aussparung 5 nicht überdeckt. Um das Rotorteil 2 in dem Statorteil 3 zu halten, ist auf der dem Rotorteil 2 gegenüberliegenden Seite des Bodens 4 des Statorteils 3 ein Führungsring 6 vorgesehen, dessen Innenwandung 7 Aussparungen 8 aufweist, in die Klipse 9 des Rotorteils 2 eingreifen, um das Rotorteil 2 drehfest mit dem Führungsring 6 zu verbinden. Der flanschartig ausgebildete Führungsring 6 weist eine umfangsseitige Verzahnung 10 zum Antrieb eines Messzahnrades eines nicht dargestellten Lenkwinkelsensors auf. An dem Rotorteil 2 ist eine Lagerstelle für eine im Querschnitt S-förmig ausgestaltete Sperrwippe 12 ausgeformt. Die Sperrwippe 12 umfasst einen Riegelarm 13 sowie einen Betätigungsarm 14, wobei sich der Riegelarm 13 unterhalb einer entsprechenden Stirnfläche 15 des Rotorteils erstreckt und der Betätigungsarm 14 in einen Freiraum 16 zur Aufnahme einer Lenkradnabe 17 des Lenkrades 1 ragt.

In der Montageposition der Verbindungseinrichtung wird der Betätigungsarm 14 der Sperrwippe 12 bei nicht montiertem Lenkrad derart von einem stirnseitig in das Rotorteil 2 eingesetzten Druckfeder belasteten Betätiger beaufschlagt, dass das freie Ende des Betätigungsarms 14 in einer Vertiefung 18 einliegt, die in einer Stirnfläche 19 des Führungsringes 6 eingelassen ist, wodurch die Sperrwippe 12 in der Fixierstellung gegen einwirkende Drehmomente stabilisiert und eine übermäßige Krafteinwirkung auf die Lagerstelle vermieden ist. Hierbei befindet sich der Riegelarm 13 der Sperrwippe 12 in der bodenseitigen Aussparung 8 des Statorteils 3, wodurch eine Verdrehung des Rotorteils 2 sowie des Führungsringes 6 gegenüber dem Statorteil 3 verhindert ist. Beim Montieren des Lenkrades 1 beaufschlagt die Lenkradnabe 17 den Betätigungsarm 14 der Sperrwippe 12, die daraufhin entgegen der Wirkung der Druckfeder 20 verschwenkt, wodurch der Riegelarm 13 aus der Aussparung 5 des Statorteils 3 gelangt. Sonach sind das Rotorteil 3 sowie der Führungsring 6 gegenüber dem Statorteil 3 frei verdrehbar. Die S-förmige Ausgestaltung der Sperrwippe 12 begünstigt sowohl die Beaufschlagung des Betätigungsarmes 14 als auch das Gleiten des Druckfeder belasteten Betätigers 21 auf dem Riegelarm 13 beim Verschwenken der Sperrwippe 12.

## Patentansprüche

1. Elektrische Verbindungseinrichtung zur Anordnung zwischen einem Lenkrad (1) und einem Lenkstockmodul eines Kraftfahrzeuges mit einem Rotorteil (2) und einem Statorteil (3) zum Umschließen mindestens eines jeweils endseitig damit verbundenen elektrischen Leiters, wobei das in das Statorteil (3) eingesetzte Rotorteil (2) mit einem in dem Statorteil (3) gelagerten Führungsring (6) drehfest verbunden ist und zur Fixierung des Rotorteils (2) in einer Montageposition eine durch eine Montage des Lenkrades (1) zu lösende Druckfeder beaufschlagte Sperrwippe (12) vorhanden ist, **dadurch gekennzeichnet, dass** die Sperrwippe (12) derart zwischen dem Führungsring (6) und dem Statorteil (3) wirkt, dass bei einem nicht montierten Lenkrad (1) eine Relativverdrehung verhindert ist, wobei ein Riegelarm (13) der Sperrwippe (12) von einem stirnseitig in das Rotorteil (2) eingesetztes Druckfeder belasteten Betätiger (21) in Richtung des Führungsringes (6) beaufschlagt ist und das freie Ende des Riegelarmes (13) in der Fixierstellung in einer Vertiefung (18) des Führungsringes (6) einliegt.

2. Verbindungseinrichtung nach Anspruch 1, **dadurch gekennzeichnet, dass** der Führungsring (6) auf einer dem Rotorteil (2) abgewandten Seite eines Bodens (4) des Statorteils (3) angeordnet ist.

3. Verbindungseinrichtung nach Anspruch 1 oder 2, **dadurch gekennzeichnet, dass** das Rotorteil (2) eine Lagerstelle (11) für die Sperrwippe (12) aufweist, deren Riegelarm (13) unterhalb des Rotorteils (2) angeordnet ist und deren Betätigungsarm (14) sich in einen Freiraum (16) zur Aufnahme einer Lenkradnabe (17) erstreckt.

4. Verbindungseinrichtung nach einem der Ansprüche 1 bis 3, **dadurch gekennzeichnet, dass** die Sperrwippe (12) im Querschnitt S-förmig ausgestaltet ist.

5. Verbindungseinrichtung nach einem der Ansprüche 1 bis 4, **dadurch gekennzeichnet, dass** der Riegelarm (13) in der Fixierstellung in eine bodenseitige Aussparung (8) des Statorteils (3) ragt.

6. Verbindungseinrichtung nach einem der Ansprüche 1 bis 5, **dadurch gekennzeichnet, dass** die freie Stirnseite der Lenkradnabe (17) bei der Montage des Lenkrades (1) den Betätigungsarm (12) derart beaufschlagt, dass die Sperrwippe (12) entgegen der Wirkung des Betätigers (21) verschwenkt und der Riegelarm (13) aus der Aussparung (5) des Statorteils (3) gelangt.

7. Verbindungseinrichtung nach einem der Ansprüche 1 bis 6, **dadurch gekennzeichnet, dass** der Führungsring (6) eine umfangsseitige Verzahnung (10) zum Antrieb eines Messzahnrades eines Lenkwinkelsensors aufweist.

8. Verbindungseinrichtung nach einem der Ansprüche 1 bis 7, **dadurch gekennzeichnet, dass** das Rotorteil (2) mit dem Führungsring (3) fest verklipst ist.

## Claims

1. Electric connecting device for arranging between a steering wheel (1) and a steering column module of a motor vehicle, having a rotor part (2) and a stator part (3) for enclosing at least one electric conductor connected thereto at the end in each case, wherein the rotor part (2) inserted into the stator part (3) is connected in a manner fixed to rotation to a guide ring (6) mounted in the stator part (3) and for fixing the rotor part (2) in an assembly position there is a blocking rocker (12) acted upon by a compression spring to be released by assembly of the steering wheel (1), **characterised in that** the blocking rocker (12) acts between the guide ring (6) and the stator part (3) in such a way that in the case of an unassembled steering wheel (1) relative twisting is prevented, wherein a bolt arm (13) of the blocking rocker (12) is acted upon in the direction of the guide ring (6) by an actuator (21) under load from a compression spring inserted into the face of the rotor part (2) and the free end of the bolt arm (13) in the fixing position is lodged in a depression (18) in the guide ring (6).

2. Connecting device according to claim 1, **characterised in that** the guide ring (6) is arranged on the side of a base (4) of the stator part (3) facing away from the rotor part (2).

3. Connecting device according to claim 1 or 2, **characterised in that** the rotor part (2) comprises a bearing point (11) for the blocking rocker (12) whose bolt arm (13) is arranged below the rotor part (2) and whose actuating arm (14) extends into an open space (16) for accommodating a steering wheel hub (17).

4. Connecting device according to any of claims 1 to 3, **characterised in that** the blocking rocker (12) is designed with a S-shaped cross-section.

5. Connecting device according to any of claims 1 to 4, **characterised in that** the bolt arm (13) in the fixing position projects into a recess (8) on the bottom of the stator part (3).

6. Connecting device according to any of claims 1 to 5, **characterised in that** when assembling the steering wheel (1) the free end face of the steering wheel hub (17) acts upon the actuating arm (12) in such a way that the blocking rocker (12) swivels counter to the action of the actuator (21) and the bolt arm (13) comes out of the recess (5) of the stator part (3).

7. Connecting device according to any of claims 1 to 6, **characterised in that** the guide ring (6) comprises a toothed structure (10) on its circumference for driving a measuring gear wheel of a steering angle sensor.

8. Connecting device according to any of claims 1 to 7, **characterised in that** the rotor part (2) is rigidly clipped to the guide ring (3).

## Revendications

1. Dispositif de connexion électrique à disposer entre un volant de direction (1) et un module de colonne de direction d'une voiture avec une partie de rotor (2) et une partie de stator (3) pour entourer au moins un conducteur électrique relié ainsi chaque fois du côté de l'extrémité, la partie de rotor insérée dans la partie de stator (3) étant reliée avec immobilité en rotation à une bague de guidage (6) logée dans la partie de stator (3) et pour fixer la partie de rotor (2) dans une position de montage, il existe une bascule d'arrêt (12) sollicitée par ressort de pression à desserrer à travers un montage du volant de direction (1), **caractérisé en ce que** la bascule d'arrêt (12) agit entre la bague de guidage (6) et la partie de stator (3) de telle manière que dans le cas d'un volant de direction (1) non monté une rotation relative est empêchée, un bras de verrouillage (13) de la bascule d'arrêt (12) étant sollicité par un actionneur chargé (21) rappelé par ressort de pression inséré à l'avant dans la partie de rotor (2) en direction de la bague de guidage (6) et l'extrémité libre du bras de verrouillage (13) se trouve dans la position de fixation dans un creux (18) de la bague de guidage (6).

2. Dispositif de connexion selon la revendication 1, **caractérisé en ce que** la bague de guidage (6) est disposée sur un côté d'un fond (4) de la partie de stator (3) tourné vers la partie de rotor (2)

3. Dispositif de connexion selon la revendication 1 ou 2, **caractérisé en ce que** la partie de rotor (2) comporte un point d'appui (11) pour la bascule d'arrêt (12), dont le bras de verrouillage (13) est disposé en dessous de la partie de rotor (2) et dont le bras d'actionnement (4) s'étend dans un espace libre (16) pour recevoir un moyeu de volant (17) .

4. Dispositif de connexion selon l'une des revendications 1 à 3, **caractérisé en ce que** la bascule d'arrêt (12) est configurée en forme de S en section transversale.

5. Dispositif de connexion selon l'une des revendications 1 à 4, **caractérisé en ce que** le bras de verrouillage (13) se dresse dans la position de fixation dans une encoche de fond (8) de la partie de stator (3).

6. Dispositif de connexion selon l'une des revendications 1 à 5, **caractérisé en ce que** la face avant libre du moyeu de volant (17) lors du montage du volant (1) sollicite le bras d'actionnement (12) de telle manière que la bascule d'arrêt (12) bascule à l'encontre de l'effet de l'actionneur (21) et le bras de verrouillage (13) sort du creux (5) de la partie de stator (3).

7. Dispositif de connexion selon l'une des revendications 1 à 6, **caractérisé en ce que** la bague de guidage (6) comporte une denture périphérique (10) pour l'entraînement d'une roue dentée de mesure d'un capteur d'angle de direction.

8. Dispositif de connexion selon l'une des revendications 1 à 7, **caractérisé en ce que** la partie de rotor (2) est solidement fixée à la bague de guidage (3) par un clip.
